# EUROPÄISCHE PATENTSCHRIFT

(11) **EP 3 744 623 B1**
(45) Veröffentlichungstag und Bekanntmachung des Hinweises auf die Patenterteilung: **03.08.2022**
(21) Anmeldenummer: 20176545.0
(22) Anmeldetag: 26.05.2020
(51) Int. Cl.: B62J 6/022, B62J 45/41, B62J 6/026, B62J 6/027, B60Q 1/00, B60Q 1/04

(54) **SCHEINWERFER MIT SENSOR**
HEADLIGHT WITH SENSOR
PHARE POURVU DE CAPTEUR

(30) Priorität: 29.05.2019 AT 504972019
(43) Veröffentlichungstag der Anmeldung: 02.12.2020
(73) Patentinhaber: KTM AG, 5230 Mattighofen (AT)
(72) Erfinder: RIENMUELLER, Stephan, 5431 Kuchl (AT); ZBYNEK, Kremzer, 5221 Lochen am See (AT)
(74) Vertreter: Torggler & Hofmann Patentanwälte - Innsbruck

(56) Entgegenhaltungen:
- EP-A1- 3 053 818
- EP-A1- 3 243 731
- WO-A1-2019/224957
- JP-A- 2015 123 840
- JP-A- 2017 039 487
- JP-A- 2019 039 759

## Beschreibung

Die Erfindung betrifft einen Motorradscheinwerfer mit einem Träger und zumindest einem, am Träger montierten Leuchtkörper, und zumindest einem Sensor, der zur Erfassung von Merkmalen eines in Fahrtrichtung vor dem Motorrad liegenden Bereichs ausgebildet ist. Die Erfindung betrifft weiters ein Motorrad mit einem solchen Motorradscheinwerfer. Die Erfindung betrifft weiters ein Motorrad mit einem Rahmen und einem Motorradscheinwerfer, wobei der Motorradscheinwerfer zumindest einen Leuchtkörper und einen Träger aufweist, an welchem der Leuchtkörper montiert ist, und zumindest einem Sensor, der zur Erfassung von Merkmalen eines in Fahrtrichtung vor dem Motorrad liegenden Bereichs ausgebildet ist, wobei der zumindest eine Sensor an einem Tragelement befestigt ist und wobei eine am Rahmen befestigte Halterung vorgesehen ist, an welcher der Motorradscheinwerfer und das Tragelement gemeinsam montiert sind.

Moderne Fahrzeuge weisen eine Reihe von Assistenzsystemen auf, die einerseits den Fahrkomfort erhöhen, andererseits den Fahrer unterstützen und dadurch erheblich zu höherer Sicherheit im Verkehr beitragen. Notwendige Voraussetzung für das Funktionieren solcher Assistenzsysteme ist die Möglichkeit, die Umgebung des Fahrzeugs und/oder den Zustand des Fahrzeugs sensorisch zu erfassen. Die so gewonnen Daten werden von einer Rechnereinheit im Fahrzeug ausgewertet. Für den Fall, dass die Rechnereinheit eine Situation der Umgebung oder einen Fahrzeugzustand als problematisch oder kritisch ansieht, wird ein Warnsignal ausgegeben oder in den Betrieb des Fahrzeugs eingegriffen, etwa indem vom Fahrzeug selbstständig ein Bremsvorgang ausgelöst wird.

Bei Personenkraftwagen ist es relativ einfach, die für die Erfassung der Umgebung notwendigen Sensoren unterzubringen. Hierzu bietet sich insbesondere der zentrale Bereich oberhalb des Rückspiegels hinter der Windschutzscheibe an. Ebenso ist es üblich, diese Sensoren im oder unterhalb des Kühlergrills anzubringen. Bei Motorrädern ist die Anordnung der für die Erfassung der Umgebung notwendigen Sensoren deutlich schwieriger, da zum einen im Frontbereich viel weniger Platz zur Verfügung steht. Zum anderen vollführen Motorräder aufgrund der Schräglagen beim Kurvenfahren viel größere Änderungen ihrer Ausrichtung in Bezug auf die Fahrbahn als Personenkraftwagen, sodass deutlich größere Kräfte auf die Sensoren und ihre Befestigungsvorrichtungen einwirken. Dies gilt in ganz besonderem Maße für Enduro-Motorrädern, die häufig auf unbefestigten Strecken bewegt werden.

Zu diesem Zweck sind in den Druckschriften WO 2018/043,485 A1, WO 2019/039,051 A1 Motorräder gezeigt, die Sensoren aufweisen, die im Motoradscheinwerfer und somit zwar an sich günstig positioniert sind. Aufgrund der Anordnung der Sensoren auf der Unterseite des Scheinwerfergehäuses oder an der Oberseite der für die Versorgung der Leuchtmittel vorgesehenen Leiterplatte ist im konkreten Fall die Erfassung der Umgebung dennoch nicht vollständig möglich. Zudem sind diese Sensoren teilweise dem Strahlungsfeld der Leuchtkörper ausgesetzt, werden also von den Leuchtkörpern geblendet, was sich negativ auf die Datenerfassung der Sensoren auswirkt, insbesondere im Falle optischer Sensoren. Darüber hinaus sind die in diesen Druckschriften gezeigten Sensoren aufgrund ihrer Positionierung nicht stabil befestigbar und laufen Gefahr, den sich beim Motorradfahren ergebenden Belastungen nicht stand zu halten. Dies gilt insbesondere für das in der EP 2,824,022 A1 und der EP 3,053,818 A1 offenbarte Motorrad, bei dem der Sensor zudem außerhalb des eigentlichen Scheinwerfers angeordnet ist.

In der EP 3,243,731 A1 ist ein Motorrad mit einer Kamera, welche an einer Leiste der Verkleidung des Motorrads und neben dem Motorradscheinwerfer angeordnet ist. Die WO 2019/224957 A1 zeigt einen Motorradscheinwerfer, wobei ein Sensor unterhalb des Motorradscheinwerfers angeordnet ist. Die JP 2015 123840 A und JP 2019 039759 A zeigen Motorradscheinwerfer mit einem abgeteilten Bereich im Gehäuse für einen Sensor. Die JP 2019 039759 A zeigt einen Motorradscheinwerfer mit einem Sensor im Gehäuse.

Die vorliegende Erfindung stellt sich daher einerseits die Aufgabe, eine Möglichkeit zu schaffen, ein Motorrad mit zumindest einem Sensor zur Erfassung von Merkmalen eines in Fahrtrichtung vor dem Motorrad liegenden Bereichs zu versehen, wobei der Sensor günstig in Bezug auf die Höhe oberhalb der Fahrbahn angeordnet ist und wobei die Anordnung des Sensors wenig Platz benötigt, der daher für die Anordnung anderer Bauteile verwendet werden kann. Zudem soll sichergestellt sein, dass der Sensor auch bei Lageänderungen des Motorrads einen ausreichenden Bereich vor dem Motorrad erfassen kann. Andererseits soll der Sensor stabil und von äußeren Einflüssen geschützt befestigbar sein. Insbesondere soll der Sensor vom Strahlungs- und Hitzefeld der Leuchtkörper möglichst wenig beeinflusst werden, um eine durchgängige und möglichst fehlerfreie Erfassung von Daten zu gewährleisten.

Diese Aufgabe wird durch einen Motorradscheinwerfer mit den Merkmalen des Anspruchs 1, durch ein Motorrad mit einem solchen Motorradscheinwerfer sowie durch ein Motorrad mit den Merkmalen des Anspruchs 13 gelöst. Weitere vorteilhafte Ausführungen der Erfindung sind in den abhängigen Ansprüchen definiert.

Der erfindungsgemäße Motorradscheinwerfer und der Motorradscheinwerfer des erfindungsgemäßen Motorrads weisen einen oder mehrere Leuchtkörper zur Be- und Ausleuchtung eines in Fahrtrichtung vor dem Motorrad liegenden Bereichs auf. Beim Motorradscheinwerfer handelt es sich somit um einen Frontscheinwerfer. Die Leuchtkörper können verschiedene Leuchtelemente enthalten, insbesondere Leuchtelemente für ein Tagfahrlicht, ein Kurvenlicht, ein Abblendlicht und/oder ein Aufblendlicht. Zudem können die Leuchtkörper auch ein Leuchtelement für ein Blinklicht enthalten. Als Lichtquellen kommen für die Leuchtelemente an sich im Stand der Technik bekannte Vorrichtungen zum Einsatz, wie z.B. LEDs, Xenon- oder Halogen-Lichtquellen.

Der Motorradscheinwerfer weist weiter einen Träger auf, an dem zumindest ein Leuchtkörper montiert ist. Es kann dabei vorgesehen sein, dass ein Leuchtkörper einen Teil der Leuchtelemente, wie etwa die Leuchtelemente für Aufblendlicht und Abblendlicht, aufweist und dieser Leuchtkörper am Träger montiert ist, während der Leuchtkörper für die andere Leuchtelemente nicht am Träger montiert sind. Alternativ kann der am Träger montierte Leuchtkörper auch alle vorgesehenen Leuchtelemente beinhalten. Es können auch für die einzelnen Lichtfunktionen mehrere Leuchtkörper vorgesehen sein, beispielsweise zwei Leuchtkörper für Aufblendlicht, zwei Leuchtkörper für Abblendlicht, etc. und jeweils beide oder jeweils nur ein Leuchtkörper am Träger montiert sein.

Der zumindest eine Sensor ist zur Erfassung von Merkmalen eines in Fahrtrichtung vor dem Motorrad liegenden Bereichs ausgebildet. Unter dem Bereich soll hier sowohl die nähere Umgebung des Motorrads in Fahrtrichtung vor dem Motorrad und seitlich vor dem Motorrad, also rechts vor dem Motorrad und links vor dem Motorrad, verstanden werden, als auch weiter ausgedehnte Bereiche in Fahrtrichtung vor dem Motorrad und seitlich vor dem Motorrad. Beispielsweise können Sensoren zum Einsatz kommen, die Bereiche mit einer Ausdehnung von bis zu einem Kilometer erfassen können.

Je nachdem welche Merkmale vom Sensor erfasst werden, kommen verschiedene Sensoren zum Einsatz. Beispielsweise kann der Sensor derart ausgebildet sein, dass der Abstand und gegebenenfalls auch die Geschwindigkeit von Gegenständen erfasst werden, die sich in Fahrtrichtung gesehen vor dem Motorrad befinden. So kann etwa der Abstand zu einem vor dem Motorrad fahrenden Fahrzeug und gegebenenfalls dessen Geschwindigkeit ermittelt werden. Auch der Abstand zu einem stehenden Objekt kann erfasst werden. Die für das jeweilige zu erfassende Merkmal vorgesehenen Sensoren sind an sich im Stand der Technik bekannt. Beispielsweise kann es sich um Radarsensoren handeln, wobei die Frequenz der von derartigen Radarsensoren ausgestrahlten Strahlung meist im Bereich zwischen 76 und 77 GHz liegt. Auch sogenannte LIDAR-Sensoren können für die Erfindung verwendet werden. LIDAR-Sensoren arbeiten mit einer Strahlung im Infrarotbereich, um Abstände und Geschwindigkeiten von Objekten zu detektieren. Ferner können sogenannte LADAR-Sensoren für die Erfindung verwendet werden. LADAR-Sensoren verwenden Laserstrahlung zur Abstands- und Geschwindigkeitsmessung.

Je nach Abstrahlwinkel können von den Sensoren nicht nur Bereiche von in Fahrtrichtung gesehen vor dem Motorrad erfasst werden, sondern auch seitliche Bereiche, wodurch es möglich ist, Fahrzeuge oder Fußgänger, die sich von rechts oder links auf die Fahrbahn zubewegen, zu erkennen und zu detektieren. Der Erfassungsbereich kann symmetrisch aber auch asymmetrisch sein.

Das vom Sensor erfasste Merkmal kann einer Rechnereinheit zugeführt und dort analysiert werden. Auf Basis hinterlegter Daten wird je nach erfasstem Merkmal, z.B. einem zu knappen Abstand zu einem vor dem Motorrad fahrenden Fahrzeug, eine Fahrsituation als problematisch oder kritisch eingestuft. Dabei können auch Daten betreffend den Fahrzeugzustand, wie z.B. Geschwindigkeit, Neigungswinkel des Motorrads und dergleichen mehr berücksichtigt werden. Es kann eine Signalerzeugungsvorrichtung vorgesehen sein, vorzugsweise ein Display, welche von einer oder auch von mehreren Rechnereinheiten angesteuert wird, um ein Warnsignal auszugeben. Je nach Situation kann die Rechnereinheit auch eine Steuereinheit ansteuern, mit der in den Betrieb des Fahrzeugs eingegriffen wird, beispielsweise indem eine Notbremsung eingeleitet wird.

Für die Erfindung können auch Sensoren in Form von Kameras verwendet werden, die zur Aufnahme von sichtbarem Licht oder von Wärmestrahlung ausgebildet sind. Derartige Sensoren können einerseits ein Abbild der Umgebung erfassen und einer Rechnereinheit zuführen. Die Rechnereinheit kann dazu ausgebildet sein, die erfassten Objekte zu identifizieren und auf Basis dieser Identifikation eine Fahrsituation als problematisch oder kritisch einschätzen. Mittels einer Wärmebildkamera können ebenfalls Objekte identifiziert werden. Insbesondere können derartige Sensoren bei Dunkelheit Menschen oder Tiere detektieren. Zudem kann mit einer optischen Kamera oder einer Wärmebildkamera der Zustand der Fahrbahn vor dem Motorrad erfasst werden, um nach Auswertung durch eine Rechnereinheit eine kritische oder problematische Situation zu ermitteln. Durch Ausgabe eines Warnsignals kann somit z.B. auf ein Schlagloch, auf Eis oder eine anderweitig rutschige Fahrbahnoberfläche hingewiesen werden. Auch akustische Sensoren oder Ultraschall-Sensoren können für die Erfindung herangezogen werden.

Bei Sensoren, mit denen der Abstand zu einem vor dem Motorrad befindlichen Objekt und gegebenenfalls dessen Geschwindigkeit ermittelt wird, können als Bestandteil eines Abstandsregeltempomats verwendet werden. Ein solches System ist auch als Adaptive Cruise Control (ACC) bekannt.

Der Sensor kann auch dazu ausgebildet sein, mehrere verschiedenartige Merkmale zu erfassen. Es kann auch vorgesehen sein, mehrere Sensoren zu verwenden.

Die Anordenbarkeit des zumindest einen Sensors in der Öffnung des Trägers bedeutet, dass der zumindest Sensor im montierten Zustand des Motorradscheinwerfers in der Öffnung angeordnet ist. Dadurch kann der zumindest eine Sensor im Motorradscheinwerfer angeordnet sein und somit in Bezug auf die Höhe über dem Fahrbahnboden ideal positioniert sein, da auch die Positionierung des Scheinwerfers nach diesen Gesichtspunkten ausgewählt ist. Zudem wird durch eine Anordnung und somit eine Integration im Scheinwerfer kein Platz für den Sensor außerhalb des Scheinwerfers in Anspruch genommen, der für andere Bauteile verwendet werden kann. Dabei kann der Sensor beispielsweise am Gehäuse oder am Rahmen des Scheinwerfers befestigt sein. Dabei bieten jene Bereiche des Trägers, welche die Öffnung bilden, in der der zumindest eine Sensor anordenbar und im montierten Zustand des Motorradscheinwerfers angeordnet ist, Schutz vor äußeren Einflüssen und dienen auch dazu, den Sensor vom Strahlungsfeld, das von dem am Träger montierten Leuchtkörper abgestrahlt wird, abzublocken. Dadurch kann erreicht werden, dass der Sensor vom zumindest einen, am Träger montierten Leuchtköper möglichst wenig beeinflusst und nicht geblendet wird, wodurch eine konstante Erfassung von Daten gewährleistet werden werden. Insbesondere bei einem aus Metall hergestellten Träger können die die Öffnung bildenden Bereiche des Trägers einen Hitzeschutz gegen die vom Leuchtkörper erzeugte Wärme darstellen.

Die Anordnung des Sensors in der Öffnung bedeutet, dass das Sensorfeld, an dem die Daten erfasst werden, beispielsweise ein Photodetektorfeld oder eine optische Linse, zum Großteil oder zur Gänze innerhalb der Öffnung angeordnet ist.

Bei vielen Motorrädern wird der Frontscheinwerfer gemeinsam mit der Lenkstange bewegt, wenn eine Kurve gefahren wird. Bei einer Anordnung des Sensors in der Öffnung des Trägers des Motorradscheinwerfers wird neben dem Motorradscheinwerfer auch der Träger und somit der Sensor mitbewegt, sodass automatisch die Fahrbahn und somit der für die Einschätzung der Gefahrensituation relevante Bereich erfasst wird.

Erfindungsgemäß ist eine Mehrzahl von am Träger montierten Leuchtkörpern vorgesehen, wobei der Träger eine Längsrichtung und einen in Längsrichtung ausgerichteten stegförmigen Abschnitt aufweist, wobei auf beiden Seiten des stegförmigen Abschnitts zumindest jeweils ein Leuchtkörper am Träger montiert ist. Die Längsrichtung des Trägers kann im gewöhnlichen Betriebszustand des Motorrads vertikal oder alternativ auch horizontal ausgerichtet sein. Insbesondere wenn die Öffnung des Trägers an einem oberen und/oder einem unteren Ende des stegförmigen Abschnitts ausgebildet ist, ergibt sich dadurch einerseits ein symmetrisches Lichtbild durch die beidseitig angeordneten Leuchtkörper und andererseits ein besonders guten Schutz für den in der zwischen den Trägerbeinen ausgebildeten Öffnung angeordneten Sensor.

In einer Ausführungsform der Erfindung ist vorgesehen, den zumindest einen Sensor am Träger zu befestigen. Dadurch ergibt sich eine besonders vorteilhafte und stabile Positionierung des Sensors, da der Leuchtkörper für eine Ausleuchtung eines vor dem Motorrad liegenden Bereiches optimal platziert ist und es sich beim Träger um ein sehr stabiles Bauteil handelt.

Beim Träger des Motorradscheinwerfers handelt es sich um eine Vorrichtung, an der zumindest ein Leuchtkörper montiert ist. Dabei können der Rahmen und/oder das Gehäuse des Scheinwerfers als Bestandteil des Trägers ausgebildet sein, wobei Rahmen und/oder Gehäuse fix oder auch lösbar mit dem Träger verbunden sein können.

In einer Ausführungsform der Erfindung ist ein Tragelement vorgesehen, an dem der zumindest eine Sensor befestigt ist, wobei das Trageelement als Bestandteil des Trägers ausgebildet ist. Beispielsweise ist ein spezieller Bereich der Öffnung des Trägers als Tragelement ausgebildet, indem dort ein Haltemittel für die Befestigung des Sensors vorgesehen ist.

Alternativ ist das Tragelement am Gehäuse des Scheinwerfers und/oder am Rahmen des Scheinwerfers und/oder am Träger befestigt, wobei das Tragelement als ein vom Träger gesondertes Bauteil ausgebildet ist. Beispielsweise kann das Tragelement als gesonderter Rahmen ausgebildet sein, der mittels lösbarer Befestigungsmittel am Träger des Leuchtkörpers und/oder am Gehäuse und/oder am Rahmen des Scheinwerfers befestigt ist. Es ist auch möglich, dass das Tragelement unlösbar am Träger und/oder am Gehäuse und/oder am Rahmen des Scheinwerfers befestigt ist, beispielsweise indem das Tragelement an den Träger und/oder an das Gehäuse und/oder an den Rahmen des Scheinwerfers geschweißt oder geklebt ist.

Im Falle des erfindungsgemäßen Motorrads ist ein Tragelement für die Befestigung des zumindest einen Sensors vorgesehen, wobei das Tragelement und der Motorradscheinwerfer gemeinsam an einer Halterung montiert sind, die am Rahmen des erfindungsgemäßen Motorrads befestigt ist. Auch in diesem Fall kann sich eine günstige Positionierung oberhalb des Fahrbahnbodens ergeben.

Dies gilt insbesondere für eine Ausführungsform der Erfindung, bei der der Träger, an welchem zumindest ein Leuchtkörper des Motorradscheinwerfers montiert ist, und das Tragelement, an welchem der Sensor befestigt ist, gemeinsam an der am Rahmen befestigten Halterung montiert sind.

Dieser Vorteil ergibt sich auch dann, wenn der Sensor an einem Tragelement befestigt ist, welches gemeinsam mit dem Scheinwerfer, insbesondere gemeinsam mit dem Träger, an welchem der Leuchtkörper montiert ist, an einer Halterung montiert sind, die am Rahmen befestigt ist. Bei einer solchen Halterung kann es sich beispielsweise um eine Tragmaske handeln, die z.B. mittels Gummimaschen am Rahmen befestigt ist. Durch eine gemeinsame Montage des Tragelements und des Scheinwerfers, insbesondere des Trägers, an dem zumindest ein Leuchtkörper befestigt ist, an einer Halterung kann der Sensor in unmittelbarer Nähe des Motorradscheinwerfers montiert werden, auch wenn der Sensor nicht direkt am Motorradscheinwerfer befestigt ist. Auch in diesem Fall wird wenig Platz verbraucht. Zudem ist der Sensor in einer günstigen Höhe in Bezug auf die Fahrbahnoberfläche montiert.

Bei einer Anordnung des Sensors in der Öffnung des Trägers, insbesondere bei einer Befestigung am Träger, oder wenn das Tragelement, an dem der Sensor befestigt ist, als Bestandteil des Trägers ausgebildet ist, ist der Sensor aufgrund der gemeinsamen Lagerung mit dem Scheinwerfer besonders vibrationsgedämpft und entkoppelt von anderen Schwingungen gelagert, was sich günstig auf die Erfassung von Merkmalen durch den Sensor auswirkt.

Auch bei einer Befestigung an einem Tragelement, welches gemeinsam mit dem Scheinwerfer an einer Halterung montiert ist, ist eine Vibrationsdämpfung möglich, insbesondere wenn das Tragelement mit dem Scheinwerfer etwa über ein Befestigungsmittel verbunden ist.

In einer Ausführungsform der Erfindung weist der Träger zwei Trägerbeine auf, wobei die Öffnung durch den Bereich zwischen den Trägerbeinen ausgebildet ist. Die Trägerbeine können dabei an einem oberen und/oder einem unteren Ende des Trägers vorgesehen sein. Dadurch ergibt sich eine besonders platzsparende und vor allem stabile Befestigung des Sensors, der durch die Trägerbeine besonders gut vor Einflüssen des Leuchtkörpers geschützt. Dies gilt sowohl für die Funktion als Hitzeschutz als auch Blendschutz gegen das Strahlungsfeld des Leuchtkörpers. Der Träger kann dabei eine gabelförmige Form aufweisen. Der Sensor kann in einer Ausführungsform direkt oder indirekt an den Trägerbeinen befestigt sein.

Diese Vorteile ergeben sich auch in einer anderen Ausführungsform der Erfindung, bei der der Träger einen ringförmigen Bereich aufweist, der die Öffnung, in der der Sensor anordenbar ist, umrandet. Hier kann der Sensor von allen Seiten durch den Träger geschützt werden.

In einer Ausführungsform der Erfindung weist der Scheinwerfer, insbesondere der Träger, ein Kühlelement für die Kühlung des Leuchtkörpers auf, wobei der Sensor am Kühlelement befestigt ist. Ist ein Tragelement vorgesehen, an dem der Sensor befestigt ist, kann alternativ das Tragelement am Kühlelement befestigt sein. Um eine möglichst umfassende Kühlung zu erreichen, ist das Kühlelement für den Leuchtkörper oftmals zentral im Scheinwerfer angeordnet. Durch eine Befestigung des Sensors oder des Tragelements mit dem Sensor am Kühlelement steht somit eine zentrale Position für den Sensor zur Verfügung ohne dass viel Platz, der für andere Bauteile benötigt würde, verbraucht wird. Eine kompakte Bauweise ist somit für den erfindungsgemäßen Motorradscheinwerfer möglich.

In einer Ausführungsform der Erfindung ist der Sensor relativ zum Scheinwerfer, insbesondere relativ zum Träger, bewegbar gelagert. Aufgrund der Empfindlichkeit des Sensors muss auf die Justierung des Sensors besonderes Augenmerk gelegt werden. Indem der Sensor oder das Tragelement, an dem der Sensor befestigt ist, relativ zum Scheinwerfer, insbesondere relativ zum Träger, bewegbar gelagert ist, ist eine Justierung gesondert vom Scheinwerfer und dem Leuchtkörper möglich. So kann vorgesehen sein, die Justierung des Sensors vom Werk oder durch einen Spezialbetrieb durchführen zu lassen, während die weniger empfindliche und häufiger durchzuführende Justierung des Scheinwerfers von üblichen Reparaturwerkstätten oder auch vom Fahrer selbst durchgeführt werden kann.

In einer Ausführungsform der Erfindung ist eine gemeinsame Abdeckung für den zumindest einen Sensor und den zumindest einen, am Träger montierten Leuchtkörper vorgesehen. Dadurch kann der Sensor vor Einflüssen von außen geschützt werden, ohne dass eine gesonderte Vorrichtung notwendig wäre. Die Abdeckung ist zumindest teilweise transparent, wobei häufig Glas oder ein Kunststoff als Material verwendet wird. Es kann jedoch je nach verwendetem Sensor auch vorgesehen sein, dass der oberhalb des Sensors angeordnete Bereich der Abdeckung für Licht des sichtbaren Spektrums nicht transparent ausgeführt ist.

In einer Ausführungsform der Erfindung weist der Scheinwerfer eine gedachte Symmetrieebene auf. Dabei kann es sich um eine Ebene handeln, die im gewöhnlichen Gebrauchszustand des Motorrads, wenn also das Motorrad nicht in einer Schräglage gefahren wird, vertikal zum Boden angeordnet ist und in Längsrichtung gesehen mittig durch das Motorrad verläuft. Alternativ kann es sich um eine Ebene handeln, die im normalen Gebrauchszustand des Motorrads horizontal angeordnet ist. Es kann vorgesehen sein, dass die gedachte Symmetrieebene im stegförmigen Abschnitt des Trägers angeordnet ist, wobei auf beiden Seiten des stegförmigen Abschnitts Leuchtkörper vorgesehen sind, die ebenfalls symmetrisch in Bezug auf die gedachte Symmetrieebene angeordnet sind, wodurch sich ein besonders symmetrisches Lichtbild ergibt. Es kann vorgesehen sein, dass der Sensor im montierten Zustand die gedachte Symmetrieebene schneidet, dadurch ergibt sich eine zentrale Position in Bezug auf den Scheinwerfer.

Weiters kann vorgesehen sein, dass auch der Sensor über eine gedachte Symmetrieebene verfügt, wobei die gedachte Symmetrieebene des Sensors in montiertem Zustand mit der gedachten Symmetrieebene des Scheinwerfers übereinstimmt. Der Sensor ist somit symmetrisch in Bezug auf die gedachte Symmetrieebene des Scheinwerfers montiert, wodurch sich eine besonders zentrale Position des Sensors in Bezug auf den Scheinwerfers ergibt.

Durch die erfindungsgemäß vorgesehene Öffnung kann der Sensor zwischen oberer und unterer Begrenzungskante des Scheinwerfers sowie zwischen rechter und linker Begrenzungskante des Scheinwerfers angeordnet sein, wodurch sich ein besonders geringer Platzbedarf für den Sensor ergibt. Zusätzlich kann die Ausnehmung symmetrisch in Bezug auf eine gedachte Symmetrieebene des Scheinwerfers angeordnet sein, wobei sich eine besonders zentrale Positionierung für den Sensor bei gleichzeitiger Platzersparnis ergibt.

Weitere Vorteile und Einzelheiten der Erfindung werden für verschiedene Ausführungsbeispiele anhand der folgenden Figuren diskutiert. Dabei zeigt:
- Fig. 1: eine schematische perspektivische Darstellung eines erfindungsgemäßen Motorrads,
- Fig. 2: eine Darstellung des Erfassungsbereiches eines Sensors,
- Fig. 3: eine schematische Vorderansicht einer Ausführungsform eines erfindungsgemäßen Scheinwerfers,
- Fig. 4: eine schematische Vorderansicht einer weiteren Ausführungsform eines erfindungsgemäßen Scheinwerfers,
- Fig. 5: eine schematische Seitenansicht einer weiteren Ausführungsform eines erfindungsgemäßen Scheinwerfers,
- Fig. 6: eine schematische Vorderansicht einer weiteren Ausführungsform eines erfindungsgemäßen Scheinwerfers,
- Fig. 7: eine schematische Vorderansicht einer weiteren Ausführungsform eines erfindungsgemäßen Scheinwerfers, und
- Fig. 8: eine schematische Seitenansicht einer weiteren Ausführungsform eines erfindungsgemäßen Scheinwerfers, und
- Fig. 9: eine schematische Vorderansicht einer weiteren Ausführungsform eines erfindungsgemäßen Scheinwerfers.

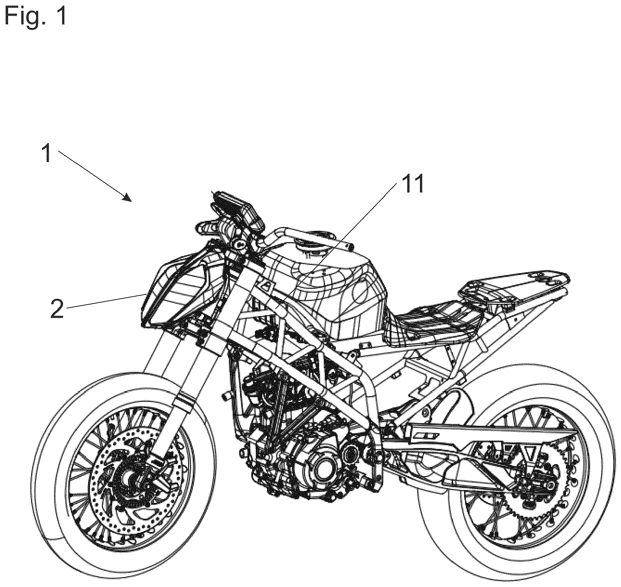

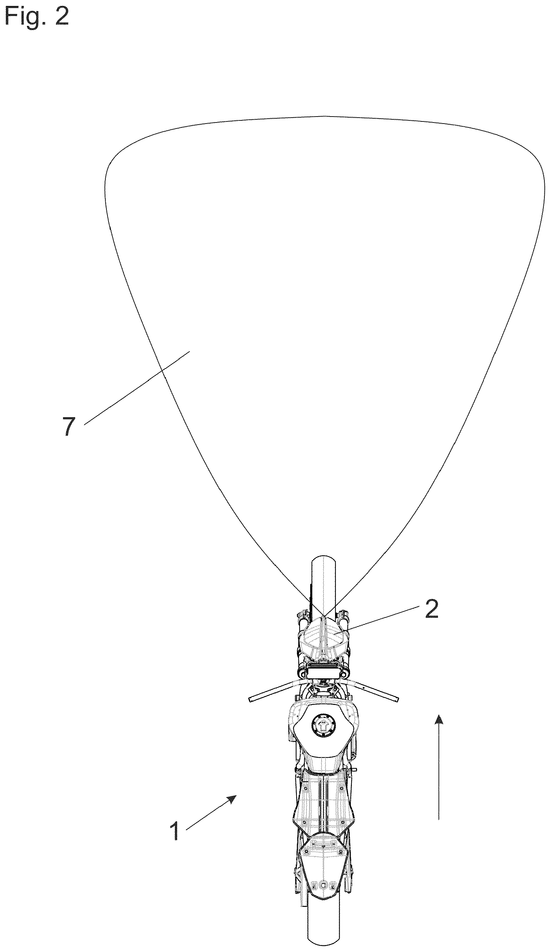

Fig. 1 zeigt eine perspektivische Darstellung eines erfindungsgemäßen Motorrads 1 mit einem Rahmen 11 in Form eines Gitterrohrrahmens mit Ober- und Unterzügen. An der Vorderseite des Motorrads 1 ist ein Motorradscheinwerfer 2 montiert, der einen in dieser Darstellung nicht ersichtlichen Sensor 5 zur Erfassung von Merkmalen eines in Fahrtrichtung vor dem Motorrad 1 liegenden Bereichs 7 (siehe Fig. 2) ausgebildet ist.

Fig. 2 zeigt eine Draufsicht des Motorrads 1, wobei der vom Sensor 5 erfasste Bereich 7 erkennbar ist, der in der durch den Pfeil gekennzeichneten Fahrtrichtung vor dem Motorrad 1 liegt. Der dargestellte Bereich ist nicht maßstabsgetreu. Beispielsweise ist es vorstellbar, dass der Bereich 7 mehrere hundert Meter vor das Motorrad 1 reicht. Es ist auch eine geschwindigkeitsabhängige Ausgestaltung des Erfassungsbereichs 7 denkbar. In diesem Fall ist der Bereich 7 symmetrisch ausgestaltet. Auch ein asymmetrischer Erfassungsbereich 7 ist aber je nach zu erfassendem Merkmal denkbar.

Der Sensor 5 ist ausgebildet, Merkmale innerhalb dieses Bereichs 7 zu erfassen, beispielsweise Abstand und Geschwindigkeit eines innerhalb dieses Bereichs 7 vordem Motorrad 1 fahrenden Fahrzeugs. Durch Übermittlung der vom Sensor 5 erfassten Daten kann einerseits eine Signalerzeugungsvorrichtung, beispielsweise ein Display, angesteuert werden, ein Warnsignal zu erzeugen. Andererseits wäre es auch möglich, eine ACC-Vorrichtung (Adaptive Cruise Control) anzusteuern, wodurch Gas und Bremse automatisch gesteuert werden, um das Motorrad 1 in einem bestimmten Abstandbereich hinter dem Vorderfahrzeug zu halten.

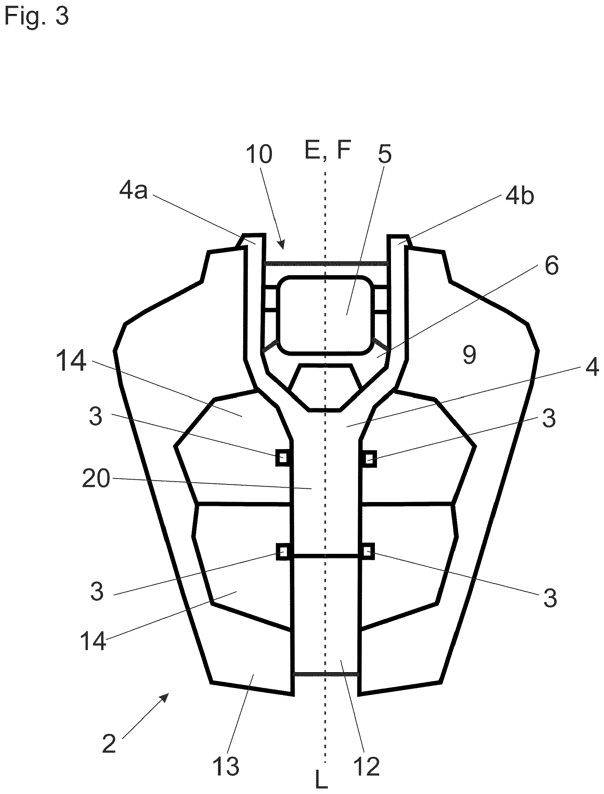

Fig. 3 zeigt eine Vorderansicht einer Ausführungsform eines erfindungsgemäßen Scheinwerfers 2, in dem der Sensor 5 angeordnet ist. Der Scheinwerfer 2 weist in diesem Ausführungsbeispiel einen, eine Längsrichtung L aufweisenden Träger 4 auf, an dem mehrere (schematisch dargestellte) Leuchtkörper 3 auf beiden Seiten eines stegförmigen Abschnitts 20 befestigt sind. Der Träger 4 kann aus Metall, beispielsweise Aluminium, gefertigt sein und dadurch als Kühlelement dienen, um die im Betrieb des Leuchtkörpers 3 entstehende Wärme abzugeben. Der Träger 4 ist an einer Halterung 12 montiert, die ihrerseits am Rahmen 11 befestigt ist. Eine transparente Abdeckung 9 schützt sowohl die Leuchtkörper 3 als auch den Sensor 5.

Im oberen Bereich weist der Träger 4 weist der Träger 4 zwei Trägerbeine 4a, 4b auf, die eine Öffnung 10 ausbilden, in der der, an einem Tragelement 6 befestigte Sensor 5 angeordnet ist. Der Träger 4 ist somit gabelförmig ausgebildet, wobei der zwischen den Trägerbeinen 4a, 4b angeordnete Sensor 5 von den Trägerbeinen 4a, 4b gegen Strahlungs- oder Hitzeeinflüsse durch die Leuchtkörper 3 gut geschützt ist. Das Sensorfeld des Sensors 5 ist zur Gänze innerhalb der Öffnung 10 angeordnet. In dieser Ausführungsform ist das Tragelement 6 fest mit dem Träger 4 verbunden, beispielsweise durch eine Schweißverbindung. Es wäre grundsätzlich auch möglich, den Sensor 5 direkt mit dem Träger 4 zu verbinden, beispielsweise indem der Sensor 5 an den Träger geklebt oder ebenfalls verschweißt wird.

Der Scheinwerfer 2 weist weiters auf beiden Seiten des Trägers 4 angeordnete Reflektoren 14 auf, die Teil der Leuchtkörper 3 sind und die das von den Leuchtelementen der Leuchtkörper 3 abgestrahlte Licht in Fahrtrichtung umlenken. Statt dieser Reflektoren 14 wäre es auch möglich, die Leuchtelemente der Leuchtkörper 3 großflächig zu gestalten. Bei den Leuchtelementen der Leuchtkörper 3 und den gegebenenfalls vorgesehenen Reflektoren 14 handelt es sich um an sich im Stand der Technik bekannte Vorrichtungen. Am Träger 4 ist weiters ein Gehäuse 13 befestigt, das ebenfalls mit den Leuchtelementen der Leuchtkörper 3 und gegebenenfalls den Reflektoren 14 verbunden ist.

Der Scheinwerfer 2 weist eine im normalen Betriebszustand des Motorrads vertikal angeordnete, gedachte Symmetrieebene E auf, in der die Längsrichtung L des Trägers 4 angeordnet ist. Auch der Sensor 5 weist eine gedachte Symmetrieebene F auf, die im montierten Zustand mit der gedachten Symmetrieebene E des Scheinwerfers 2 übereinstimmt. Dadurch ergibt sich eine zentrale und symmetrische Position für den Sensor 5, was für den Erfassungsbereich 7 günstige Auswirkungen hat.

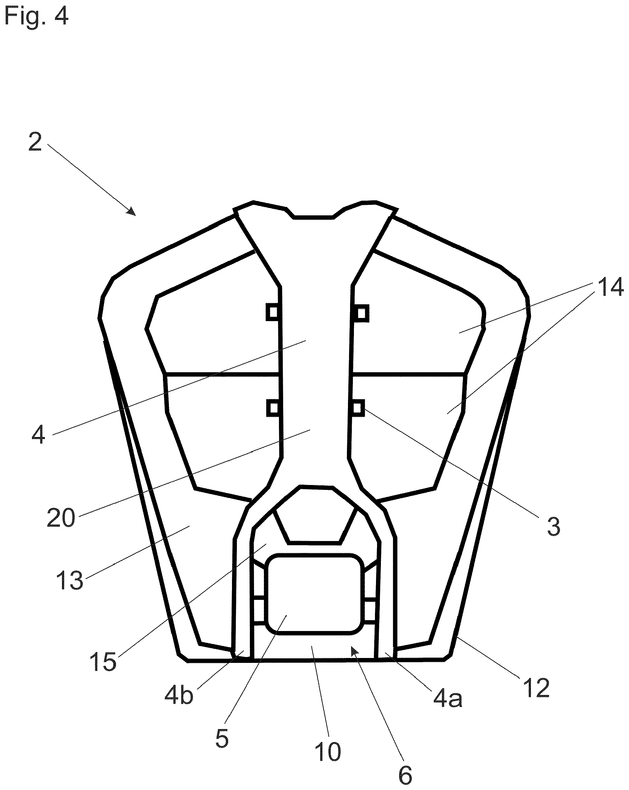

In Fig. 4 ist eine Vorderansicht einer weiteren Ausführungsform eines erfindungsgemäßen Scheinwerfers 2 mit einem integrierten Sensor 5 dargestellt. Diese Ausführungsform unterscheidet sich von der in Fig. 3 dargestellten Ausführungsform vor allem dadurch, dass der Träger 4 im unteren Bereich Trägerbeine 4a,4b aufweist, die die Öffnung 10 ausbilden, in der der Sensor 5 angeordnet ist. Wiederum weist der Scheinwerfer 2 eine gedachte Symmetrieebene E auf, die im Betriebszustand des Motorrads 1 vertikal angeordnet ist und die mit der gedachten Symmetrieebene F des Sensors 5 im montierten Zustand übereinstimmt. Der Träger 4 ist somit gabelförmig ausgebildet, wobei der zwischen den Trägerbeinen 4a, 4b angeordnete Sensor 5 von den Trägerbeinen 4a, 4b gegen Strahlungs- oder Hitzeeinflüsse durch die Leuchtkörper 3 gut geschützt ist. Das Sensorfeld des Sensors 5 ist zur Gänze innerhalb der Öffnung 10 angeordnet.

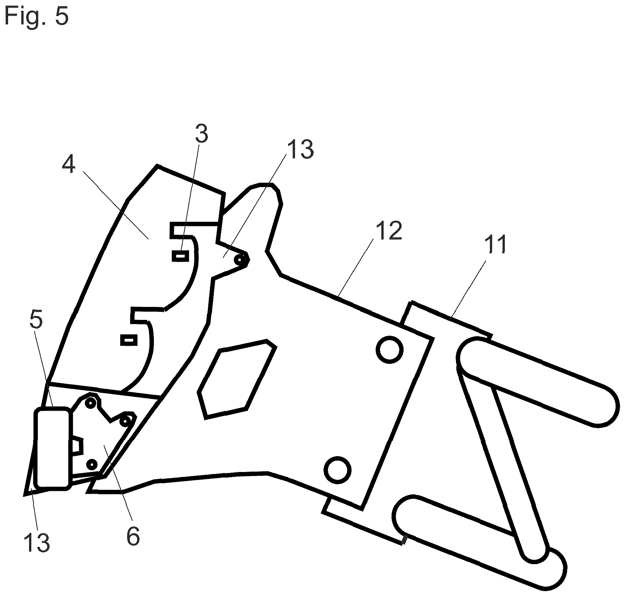

Wie anhand der zur Figur 4 gehörenden Seitenansicht der Fig. 5 erkennbar ist, ist das Tragelement 6, an dem der Sensor 5 befestigt ist, in der in den Figuren 4 und 5 dargestellten Ausführungsform des Scheinwerfers 2 über ein Tragelement 6 am Gehäuse 13 des Scheinwerfers 2 befestigt. Dabei weist das Tragelement 6 eine Verstellvorrichtung auf, mittels der der Sensor 5 relativ zum Träger 4 bewegbar gelagert ist. Dadurch ist eine von der Justierung des Leuchtkörpers 3 unabhängige Justierung des Sensors 5 möglich. Der Träger 4 ist über das Gehäuse 13 mit einer Halterung 12 verbunden, die ihrerseits am Rahmen 11 befestigt ist.

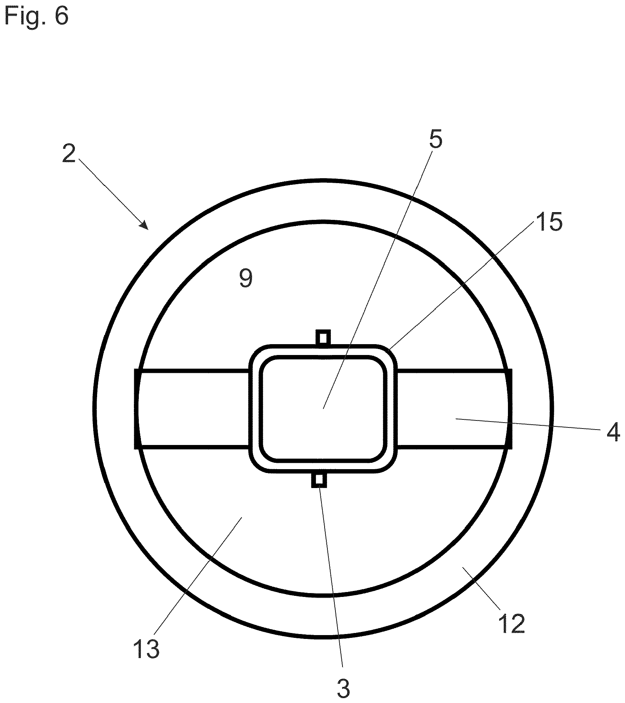

Figur 6 zeigt eine weitere Ausführungsform eines erfindungsgemäßen Scheinwerfers 2 in einer schematischen Vorderansicht. In diesem Ausführungsbeispiel weist der Träger 4 einen ringförmigen Abschnitt 15 auf, in dem der Sensor 5 am Träger 4 befestigt und somit besonders gut geschützt ist. Das Sensorfeld des Sensors 5 ist zur Gänze innerhalb der ringförmigen Umrandung 15 angeordnet. Die schematisch dargestellten Leuchtelemente des Leuchtkörpers 3 sind in diesem Ausführungsbeispiel auf dem Gehäuse 13 und neben dem Träger 4 und dem Sensor 5 angeordnet. Das Gehäuse 13 ist mit dem Träger 4 verbunden. Der oder die Leuchtkörper 3 oder die Leuchtelemente können aber auch direkt am Träger 4 befestigt sein. Die Leuchtelemente können auch größere Bereiche des Gehäuses 13 einnehmen. Das Gehäuse 13 ist an einer Halterung 12 befestigt, welche ihrerseits am Rahmen 11 des Motorrads 1 montiert ist. Wiederum weist der Scheinwerfer 2 eine gedachte Symmetrieebene E auf, die im Betriebszustand des Motorrads 1 vertikal angeordnet ist und mit der gedachten Symmetrieebene F des Sensors 5 übereinstimmt.

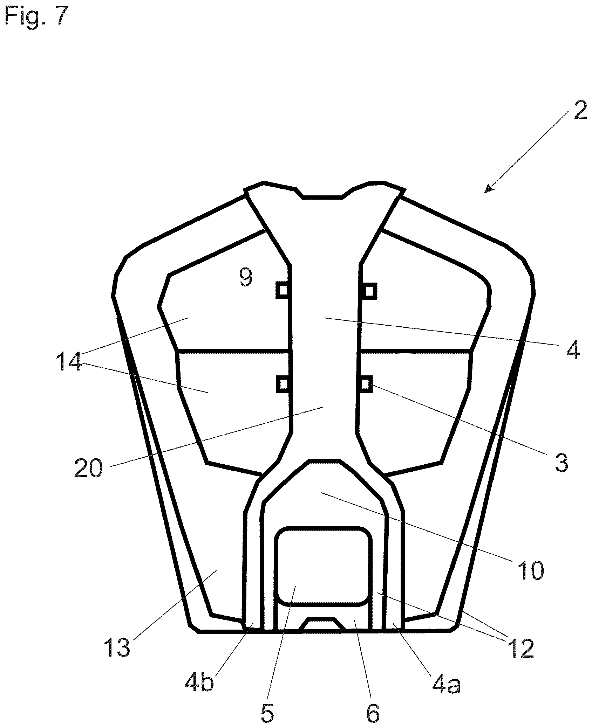

In der Fig. 7 ist eine weitere Ausführungsform eines erfindungsgemäßen Scheinwerfers 2 in einer schematischen Vorderansicht dargestellt. Große Teile dieses Scheinwerfers 2 entsprechen der in den Figuren 4 und 5 dargestellten Ausführungsform. Allerdings ist in dieser Ausführungsform das Tragelement 6 des Sensors 5 nicht über das Gehäuse 13 oder direkt mit jenem Teil des Trägers 4 verbunden, an dem die Leuchtkörper 3 befestigt sind. Eine transparente Abdeckung 9 schützt sowohl die Leuchtkörper 3 als auch den geschützt in der Öffnung 10 angeordneten Sensor 5, dessen Sensorfeld zur Gänze innerhalb der Öffnung 10 angeordnet ist.

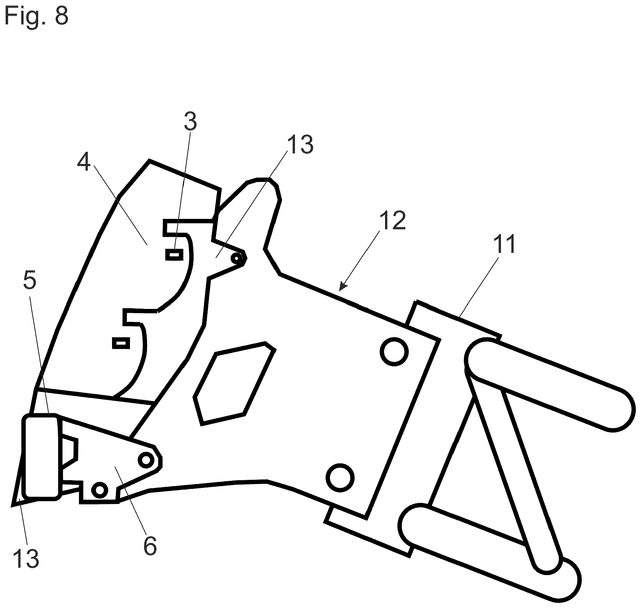

Wiederum ist anhand der zur Figur 7 zugehörigen Seitenansicht der Fig. 8 erkennbar, dass der in einer Ausnehmung 10 des Trägers 4 angeordnete Sensor an einem Tragelement 6 montiert ist, welches an einer Halterung 12 montiert ist, die ihrerseits am Rahmen 11 befestigt ist. In diesem Ausführungsbeispiel ist also der Träger 4 über das Gehäuse 13 mit der Halterung 12 verbunden, während der Sensor 5 über das Tragelement 6 gesondert an der Halterung 12 befestigt ist. An der Halterung 12 sind somit das Tragelement 6 und der Scheinwerfer 2 gemeinsam montiert. Dabei ist eine Verstellvorrichtung vorgesehen, mit der der Sensor 5 unabhängig vom Leuchtkörper 3 justiert werden kann.

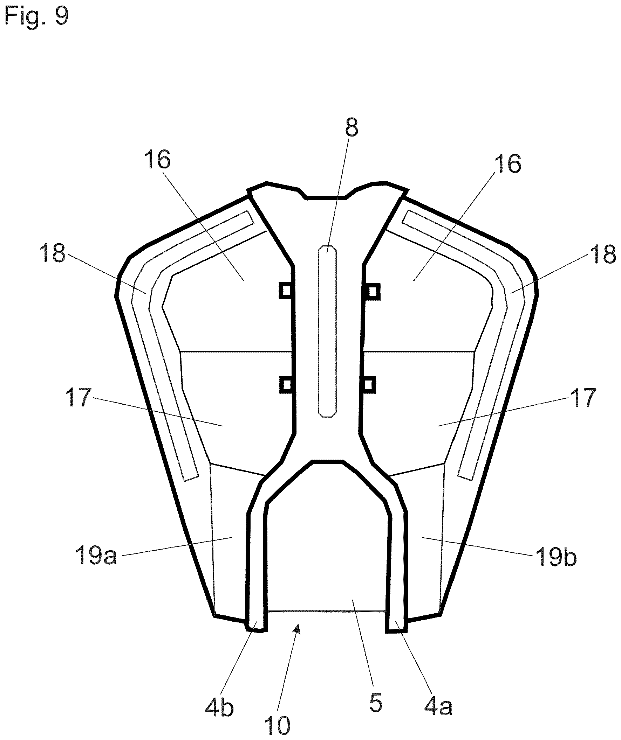

In Fig. 9 ist eine weitere Ausführungsform eines erfindungsgemäßen Scheinwerfers 2 in einer schematischen Vorderansicht dargestellt. Der Träger 4 ist aus Metall hergestellt und weist an seiner vorderen Oberfläche ein Kühlelement 8 in Form einer Kühlrippe auf. Im unteren Bereich des Trägers 4 ist eine Öffnung 10 zwischen den Trägerbeinen 4a, 4b des gabelförmigen Trägers 4 vorgesehen, in der ein Sensor 5 angeordnet ist. Der Sensor 5 ist in diesem Ausführungsbeispiel direkt an den Trägerbeinen 4a, 4b befestigt, beispielsweise indem der Sensor 5 an die Trägerwände geklebt oder geschweißt ist.

Auf beiden Seiten, also im dargestellten Fall links und rechts des stegförmigen Abschnitts 20 des Trägers 4, sind Leuchtkörper 3 befestigt, die verschiedene Leuchtelemente aufweisen, nämlich Leuchtelemente 17 für das Aufblendlicht und Leuchtelemente 16 für das Abblendlicht. Außerhalb und oberhalb der Leuchtelemente 16, 17 weisen die Leuchtkörper 3 weitere Leuchtelemente 18 für das Tagfahrlicht auf. Rechts und links der Öffnung 10 sind Leuchtelemente 19a und 19b für das rechte und das linke Kurvenfahrlicht angeordnet. Durch den Träger 4 ist der Sensor 5 dennoch vor dem Einfluss der Leuchtelemente 19a, 19b gut geschützt, da das Sensorfeld des Sensors 5 zur Gänze innerhalb der Öffnung 10 angeordnet ist. Die Leuchtelemente bilden links und rechts des Trägers Leuchtkörper 3 und sind sowohl am Träger 4 als auch am Gehäuse 13, das einen Teil des Trägers 4 darstellt und mit dem Träger 4 verbunden ist, befestigt. Eine transparente Abdeckung 9 schützt den Leuchtkörper 3 und den Sensor 5. Gut erkennbar ist, dass der Sensor 5 durch die Trägerbeine 4a, 4b insgesamt vor Blendung durch die Leuchtelemente gut geschützt ist.

### Bezugszeichenliste:

- 1: Motorrad
- 2: Motorradscheinwerfer
- 3: Leuchtkörper
- 4: Träger
- 4a, 4b: Trägerbeine
- 5: Sensor
- 6: Tragelement
- 7: Bereich vor dem Motorrad
- 8: Kühlelement
- 9: Abdeckung
- 10: Öffnung
- 11: Rahmen
- 12: Halterung
- 13: Gehäuse
- 14: Reflektoren
- 15: ringförmiger Abschnitt
- 16: Abblendlicht
- 17: Aufblendlicht
- 18: Tagfahrlicht
- 19a: rechtes Kurvenlicht
- 19b: linkes Kurvenlicht
- 20: stegförmiger Abschnitt

- E: Symmetrieebene Leuchtkörper
- F: Symmetrieebene Scheinwerfer
- L: Längsrichtung Träger

## Patentansprüche

1. Motorradscheinwerfer mit einem Träger (4) und zumindest einem, am Träger (4) montierten Leuchtkörper (3) und zumindest einem Sensor (5), der zur Erfassung von Merkmalen eines in Fahrtrichtung vor dem Motorrad (1) liegenden Bereichs (7) ausgebildet ist, wobei im Träger (4) eine Öffnung (10) vorgesehen ist, wobei der zumindest eine Sensor (5) in der Öffnung (10) anordenbar ist, wobei eine Mehrzahl von am Träger (4) montierten Leuchtkörpern (3) vorgesehen ist, **dadurch gekennzeichnet, dass** der Träger (4) eine Längsrichtung (L) und einen in Längsrichtung (L) ausgerichteten stegförmigen Abschnitt (20) aufweist, und wobei zumindest jeweils ein Leuchtkörper (3) an beiden Seiten des stegförmigen Abschnitts (20) am Träger (4) montiert ist.

2. Motorradscheinwerfer nach Anspruch 1, wobei der zumindest eine Sensor (5) am Träger (4) befestigt ist.

3. Motorradscheinwerfer nach Anspruch 1 oder 2, wobei ein Tragelement (6) vorgesehen ist, an dem der zumindest eine Sensor (5) befestigt ist und wobei das Tragelement (6) am Gehäuse (13) des Motorradscheinwerfers (2) und/oder am Rahmen des Motorradscheinwerfers (2) und/oder am Träger (4) befestigbar ist oder als Bestandteil des Trägers (4) ausgebildet ist.

4. Motorradscheinwerfer nach einem der Ansprüche 1 bis 3, wobei der Träger (4) zwei Trägerbeine (4a, 4b) aufweist und wobei die Öffnung (10) durch den Bereich zwischen den Trägerbeinen (4a, 4b) ausgebildet ist.

5. Motorradscheinwerfer nach einem der Ansprüche 1 bis 3, wobei der Träger (4) einen ringförmigen Bereich (15) aufweist, der die Öffnung (10) umrandet.

6. Motorradscheinwerfer nach einem der Ansprüche 1 bis 5, wobei der Motorradscheinwerfer (2), insbesondere der Träger (4) ein Kühlelement (8) aufweist, an dem der zumindest eine Sensor (5) oder ein Tragelement (6), an dem der zumindest eine Sensor (5) befestigt ist, befestigt ist.

7. Motorradscheinwerfer nach einem der Ansprüche 1 bis 6, wobei der zumindest eine Sensor (5) relativ zum Motorradscheinwerfer (2), insbesondere relativ zum Träger (4), bewegbar gelagert ist und/oder ein Tragelement (6), an dem der zumindest eine Sensor (5) befestigt ist, relativ zum Träger (4) bewegbar gelagert ist.

8. Motorradscheinwerfer nach einem der Ansprüche 1 bis 7, wobei der Motorradscheinwerfer (2) eine gemeinsame Abdeckung (9) für den zumindest einen Sensor (5) und den zumindest einen, am Träger (4) montierten Leuchtkörper (3) aufweist.

9. Motorradscheinwerfer nach einem der Ansprüche 1 bis 8, wobei der Scheinwerfer (2) zumindest eine gedachte Symmetrieebene (E) aufweist, und wobei der zumindest eine Sensor (5) die gedachte Symmetrieebene (E) schneidet.

10. Motorradscheinwerfer nach Anspruch 9, wobei der zumindest eine Sensor (5) eine gedachte Symmetrieebene (F) aufweist, die mit der gedachten Symmetrieebene (E) des Scheinwerfers (2) übereinstimmt.

11. Motorradscheinwerfer nach einem der Ansprüche 1 bis 10, wobei der zumindest eine Leuchtkörper (3) Leuchtelemente für ein Tagfahrlicht (18), ein Kurvenlicht (19a, 19b), ein Abblendlicht (16), ein Blinklicht und/oder ein Aufblendlicht (17) aufweist.

12. Motorrad mit einem Motorradscheinwerfer (2) nach einem der Ansprüche 1 bis 11.

13. Motorrad mit einem Motorradscheinwerfer (2) nach einem der Ansprüche 1, 2, 4, 5, 7 bis 11, umfassend einem Rahmen (11), wobei der zumindest eine Sensor (5) an einem Tragelement (6) befestigt ist, wobei eine am Rahmen (11) befestigte Halterung (12) vorgesehen ist, an welcher der Motorradscheinwerfer (2) und das Tragelement (6) gemeinsam montiert sind.

14. Motorrad nach Anspruch 13, wobei der Träger (4) und das Tragelement (6) gemeinsam an der Halterung (12) montiert sind.

## Claims

1. Motorcycle headlamp with a carrier (4) and at least one light fixture (3) mounted on the carrier (4) and at least one sensor (5), which is formed for the detection of features of an area (7) lying in front of the motorcycle (1) in the direction of travel, wherein an opening (10) is provided in the carrier (4), wherein the at least one sensor (5) can be arranged in the opening (10), wherein a plurality of light fixtures (3) mounted on the carrier (4) is provided, **characterized in that** the carrier (4) has a longitudinal direction (L) and a bar-shaped section (20) aligned in the longitudinal direction (L), and wherein in each case at least one light fixture (3) is mounted on the carrier (4) on both sides of the bar-shaped section (20).

2. Motorcycle headlamp according to claim 1, wherein the at least one sensor (5) is fastened to the carrier (4).

3. Motorcycle headlamp according to claim 1 or 2, wherein a supporting element (6) is provided, to which the at least one sensor (5) is fastened, and wherein the supporting element (6) can be fastened to the housing (13) of the motorcycle headlamp (2) and/or to the frame of the motorcycle headlamp (2) and/or to the carrier (4) or is formed as a component part of the carrier (4).

4. Motorcycle headlamp according to one of claims 1 through 3, wherein the carrier (4) has two carrier legs (4a, 4b) and wherein the opening (10) is formed by the area between the carrier legs (4a, 4b).

5. Motorcycle headlamp according to one of claims 1 through 3, wherein the carrier (4) has an annular area (15) which borders the opening (10).

6. Motorcycle headlamp according to one of claims 1 through 5, wherein the motorcycle headlamp (2), in particular the carrier (4), has a cooling element (8), to which the at least one sensor (5) or a supporting element (6), to which the at least one sensor (5) is fastened, is fastened.

7. Motorcycle headlamp according to one of claims 1 through 6, wherein the at least one sensor (5) is mounted movable relative to the motorcycle headlamp (2), in particular relative to the carrier (4), and/or a supporting element (6), to which the at least one sensor (5) is fastened, is mounted movable relative to the carrier (4).

8. Motorcycle headlamp according to one of claims 1 through 7, wherein the motorcycle headlamp (2) has a common cover (9) for the at least one sensor (5) and the at least one light fixture (3) mounted on the carrier (4).

9. Motorcycle headlamp according to one of claims 1 through 8, wherein the headlamp (2) has at least one imaginary plane of symmetry (E), and wherein the at least one sensor (5) intersects the imaginary plane of symmetry (E).

10. Motorcycle headlamp according to claim 9, wherein the sensor (5) has an imaginary plane of symmetry (F) which coincides with the imaginary plane of symmetry (E) of the headlamp (2).

11. Motorcycle headlamp according to one of claims 1 through 10, wherein the at least one light fixture (3) contains light-emitting elements for a daytime running light (18), a cornering light (19a, 19b), a dipped beam (16), an indicator and/or a full beam (17).

12. Motorcycle with a motorcycle headlamp (2) according to one of claims 1 through 11.

13. Motorcycle with a motorcycle headlamp (2) according to one of claims 1, 2, 4, 5, 7 through 11, containing a frame (11), wherein the at least one sensor (5) is fastened on a supporting element (6), wherein a bracket (12) fastened to the frame (11) is provided, on which the motorcycle headlamp (2) and the supporting element (6) are mounted together.

14. Motorcycle according to claim 13, wherein the carrier (4) and the supporting element (6) are mounted together on the bracket (12).

## Revendications

1. Phare de motocyclette avec un support (4) et au moins un corps lumineux (3) monté au niveau du support (4) et au moins un capteur (5) qui est réalisé pour la détection de caractéristiques d'une zone (7) se trouvant dans le sens de la marche devant la motocyclette (1), dans lequel une ouverture (10) est prévue dans le support (4), dans lequel l'au moins un capteur (5) peut être agencé dans l'ouverture (10), dans lequel une pluralité de corps lumineux (3) montés au niveau du support (4) est prévue, **caractérisé en ce que** le support (4) présente un sens longitudinal (L) et une section (20) en forme de nervure orientée dans le sens longitudinal (L), et dans lequel au moins respectivement un corps lumineux (3) est monté au niveau des deux côtés de la section (20) en forme de nervure au niveau du support (4).

2. Phare de motocyclette selon la revendication 1, dans lequel l'au moins un capteur (5) est fixé au support (4).

3. Phare de motocyclette selon la revendication 1 ou 2, dans lequel un élément porteur (6) est prévu, auquel l'au moins un capteur (5) est fixé et dans lequel l'élément porteur (6) peut être fixé au boîtier (13) du phare de motocyclette (2) et/ou au cadre du phare de motocyclette (2) et/ou au support (4) ou est réalisé comme constituant du support (4).

4. Phare de motocyclette selon l'une quelconque des revendications 1 à 3, dans lequel le support (4) présente deux jambes de support (4a, 4b) et dans lequel l'ouverture (10) est réalisée par la zone entre les jambes de support (4a, 4b).

5. Phare de motocyclette selon l'une quelconque des revendications 1 à 3, dans lequel le support (4) présente une zone (15) annulaire qui encadre l'ouverture (10).

6. Phare de motocyclette selon l'une quelconque des revendications 1 à 5, dans lequel le phare de motocyclette (2), en particulier le support (4) présente un élément de refroidissement (8), auquel sont fixés l'au moins un capteur (5) ou un élément porteur (6), auquel l'au moins un capteur (5) est fixé.

7. Phare de motocyclette selon l'une quelconque des revendications 1 à 6, dans lequel l'au moins un capteur (5) est logé de manière mobile par rapport au phare de motocyclette (2), en particulier par rapport au support (4), et/ou un élément porteur (6), auquel l'au moins un capteur (5) est fixé, est logé de manière mobile par rapport au support (4).

8. Phare de motocyclette selon l'une quelconque des revendications 1 à 7, dans lequel le phare de motocyclette (2) présente un recouvrement commun (9) pour l'au moins un capteur (5) et l'au moins un corps lumineux (3) monté au niveau du support (4).

9. Phare de motocyclette selon l'une quelconque des revendications 1 à 8, dans lequel le phare (2) présente au moins un plan de symétrie (E) imaginaire, et dans lequel l'au moins un capteur (5) coupe le plan de symétrie (E) imaginaire.

10. Phare de motocyclette selon la revendication 9, dans lequel l'au moins un capteur (5) présente un plan de symétrie (F) imaginaire qui concorde avec le plan de symétrie (E) imaginaire du phare (2).

11. Phare de motocyclette selon l'une quelconque des revendications 1 à 10, dans lequel l'au moins un corps lumineux (3) présente des éléments lumineux pour un feu de circulation diurne (18), un feu d'éclairage en virage (19a, 19b), un feu de croisement (16), un feu clignotant et/ou un feu de route (17).

12. Motocyclette avec un phare de motocyclette (2) selon l'une quelconque des revendications 1 à 11.

13. Motocyclette avec un phare de motocyclette (2) selon l'une quelconque des revendications 1, 2, 4, 5, 7 à 11, comprenant un cadre (11), dans laquelle l'au moins un capteur (5) est fixé à un élément porteur (6), dans laquelle un élément de fixation (12) fixé au cadre (11) est prévu, au niveau duquel le phare de motocyclette (2) et l'élément porteur (6) sont montés ensemble.

14. Motocyclette selon la revendication 13, dans laquelle le support (4) et l'élément porteur (6) sont montés ensemble au niveau du support (12).
